(19) Europäisches Patentamt / European Patent Office / Office européen des brevets

(11) **EP 3 544 805 B1**

(12) **EUROPEAN PATENT SPECIFICATION**

(45) Date of publication and mention
of the grant of the patent:
**12.02.2025 Bulletin 2025/07**

(21) Application number: **17809043.7**

(22) Date of filing: **23.11.2017**

(51) International Patent Classification (IPC):
**B32B 7/10** *(2006.01)*         **B32B 27/32** *(2006.01)*
**B65B 19/22** *(2006.01)*       **B65B 11/48** *(2006.01)*

(52) Cooperative Patent Classification (CPC):
**B32B 27/32; B32B 7/10; B65B 5/06; B65B 11/00;
B65B 11/48; B65B 19/22; B65B 53/02;**
B32B 2250/03; B32B 2250/242; B32B 2307/31;
B32B 2307/518; B32B 2307/584; B32B 2439/70;
B65B 11/585; B65B 19/02;                    (Cont.)

(86) International application number:
**PCT/IB2017/057357**

(87) International publication number:
**WO 2018/096480 (31.05.2018 Gazette 2018/22)**

(54) **MULTILAYER FILM**

MEHRSCHICHTIGE FOLIE

FILM MULTICOUCHE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.11.2016  IT 201600118572**

(43) Date of publication of application:
**02.10.2019  Bulletin 2019/40**

(73) Proprietor: **Irplast S.p.A.
Firenze (IT)**

(72) Inventors:
• **SANTILLI, Fausto
  66038 San Vito Chietino (Chieti) (IT)**

• **PIERSE, Michael
  15067 Novi Ligure (Alessandria) (IT)**

(74) Representative: **Modiano, Micaela Nadia et al
Modiano & Partners
Via Meravigli, 16
20123 Milano (IT)**

(56) References cited:
EP-A1- 2 520 428          WO-A1-01/49487
WO-A1-2011/156053     WO-A1-2012/085196
US-B1- 6 248 442

Remarks:
The file contains technical information submitted
after the application was filed and not included in this
specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

(52) Cooperative Patent Classification (CPC): (Cont.)
B65B 2051/105

**Description**

## TECHNICAL FIELD OF THE INVENTION

The present invention relates to a multilayer film for packaging particularly suitable for use as an external covering of articles packaged individually (naked collation packaging).

## BACKGROUND OF THE INVENTION

Articles of small sizes such as, for example, cigarette packets, are generally packaged in groups formed by various units to facilitate their transport and distribution to points of sale.

The use of plastic films as external covering in the formation of naked collation packages allows the total quantity of packaging materials used for grouping the individual units to be reduced, since it makes the use of intermediate packaging (e.g. made of cardboard) placed between the external covering and the internal units superfluous. In fact, in naked collation packaging, the plastic film that constitutes the external covering is in direct contact with the units contained within the packaging.

Generally, the films used as external coverings for naked collation packages are closed by means of hot-sealing. Therefore, an essential characteristic of the film that constitutes the external covering is that it can be sealed onto itself.

Furthermore, since the external covering is in direct contact with the individual units grouped inside the packaging, a further essential characteristic of the plastic films used as external coverings is that they must not seal to the units present inside the packaging at the sealing temperatures of the external covering, in particular they must not seal to the film that generally wraps the individual internal units.

When the articles that are grouped into the naked collation package are themselves individually packaged in plastic films, the sealability of the external covering to the film covering the individual articles can be minimised using an external covering having an incompatible internal surface with the film covering the individual grouped articles.

In consideration of the fact that packaging machines operate at extremely high speeds, the plastic films used as external coverings must also possess excellent physical-mechanical properties, particularly in the longitudinal direction, to allow the packaging of numerous units without the film breaking and the consequent interruption of production cycles.

In particular, in the case in which multilayer films are used, the layers constituting the over-packing must not separate (peel) due to the effect of high machine speeds.

Finally, the plastic film that constitutes the external covering must possess suitable optical properties to enable the individual units present inside the over-packing to be clearly seen when it is prepared.

Numerous examples of plastic films suitable for use as external coverings in "naked collation" packagings are known in the prior art.

Patent application US2009/0053513 describes a brilliant and high strength biaxially oriented multilayer film for packaging, wherein the internal layer is comprised of polypropylene and the external sealing layer of polyamide or of a mixture of polyamide and ethylene/vinyl alcohol copolymers.

Patent EP2520428, in the name of the Applicant, describes a multilayer film formed by a base layer comprised of polypropylene homopolymer and outer sealing layers comprising polypropylene/polybutene copolymers with a melting point of 65°-105°C. These films have good mechanical properties and high scratch resistance.

Patent application WO2014/087150 describes a method for making naked collation packages, wherein as a covering a multilayer film is used containing, in the polyolefinic sealing layer, no more than 0.2% of a silicone-based slip agent and at least 0.1% of a non-silicone-based slip agent. These films have good optical properties and a rather low sealability temperature.

In this context, the technical aim of the present invention is to provide a plastic film that can be used as an external covering in "naked collated" packagings, which shows simultaneously excellent physical-mechanical properties, good optical characteristics and suitable sealability at the sealing temperatures normally used in the sector, in combination with low stickiness to the internal units contained in the over-packing.

## SUMMARY OF THE INVENTION

In a first aspect, the present invention relates to a biaxially oriented multilayer film comprising at least three layers A/B/C, wherein:

- the external layer (A) comprises an ethylene polymer having a melting point (Tf) $\leq$ about 100°C;
- the central layer (B) comprises a propylene polymer having a melting point (Tf) $\geq$ about 140°C; and
- the internal layer (C) comprises an ethylene polymer having a melting point (Tf) > 105°C and $\leq$ about 115°C and a density of about 0.910 - 0.940 g/cm$^3$.

In a further aspect, the present invention relates to a process for producing the biaxially oriented multilayer film as described above comprising at least three layers A/B/C, wherein said process comprises the steps of:

(i) co-extruding the components comprised in the at least three layers (A), (B) and (C), obtaining a multilayer sheet;
(ii) quenching said multilayer sheet on a roller at a temperature of about 10°-40°C;
(iii) heating said multilayer sheet with heating elements maintained at a temperature of about 100°-500°C;
(iv) subjecting said multilayer sheet to simultaneous biaxial stretching without contact with metal rollers at a temperature of about 80°-210°C, with transverse (TD) and longitudinal (MD) stretching ratios selected independently in the range of about 3-10, obtaining a biaxially oriented multilayer film; and
(v) cooling the biaxially oriented multilayer film.

In a further aspect thereof, the present invention relates to a method for making a naked collation package comprising an external covering and a plurality of articles placed inside the external covering, characterised in that it comprises the use of the biaxially oriented multilayer film described above as an external covering (over-packing).

The present invention further relates to a naked collation package comprising the biaxially oriented multilayer film as described above as an external covering (over-packing).

## DESCRIPTION OF THE DRAWINGS

The features of the invention will become more apparent from the following detailed description and the accompanying drawings, in which:

- Figure 1 illustrates the peelability of the multilayer film of example 4 according to the invention as a function of the spacing between the crosspieces in the peeling test;
- Figure 2 illustrates the peelability of the film of comparative example 5 as a function of the spacing between the crosspieces in the peeling test.

## DETAILED DESCRIPTION OF THE INVENTION

In the present description and the appended claims, the percentages are expressed by weight, unless otherwise indicated.

The term "ethylene polymer" refers, in the present description and appended claims, to at least one polyolefin selected from ethylene homopolymers, ethylene copolymers with at least one alpha-olefin, in particular with at least one linear or branched C3-C12 alpha-olefin, and mixtures thereof.

Likewise, the term "propylene polymer" refers, in the present description and appended claims, to at least one polyolefin selected from propylene homopolymers, propylene copolymers with at least one alpha-olefin selected from ethylene and linear or branched C4-C12 alpha-olefins, and mixtures thereof.

The term "external layer" refers, in the present description and appended claims, to the layer of a multilayer film that forms the outer surface of the covering of a naked collation package.

The term "internal layer" refers, in the present description and appended claims, to the layer of the multilayer film used as covering placed in contact with the articles contained inside a naked collation package.

In the present description and appended claims, the term "over-packing" refers to the external packaging of a naked collation package.

In the present description and appended claims, the quantity of a comonomer in a copolymer is expressed (percentually) as the total weight of the monomer units deriving from the comonomer, with respect to the total weight of the copolymer.

Test methods to be used in determining the features of the multilayer film of the present invention are listed in the section headed "TEST METHODS".

In a first aspect, the present invention relates to a biaxially oriented multilayer film comprising at least three layers A/B/C, wherein:

- the external layer (A) comprises an ethylene polymer having a melting point (Tf) $\leq$ about 100°C, preferably about 70°-100°C, more preferably about 80°-100°C, even more preferably about 90°-100°C;
- the central layer (B) comprises a propylene polymer having a melting point (Tf) $\geq$ about 140°C, preferably $\geq$ about 160°C; and
- the internal layer (C) comprises an ethylene polymer having a melting point (Tf) > 105°C and $\leq$ about 115°C, preferably about 110°-115°C, and a density of about 0.910 - 0.940 $g/cm^3$, preferably about 0.920 - 0.930 $g/cm^3$.

The external layer (A) may comprise at least one ethylene polymer selected from ethylene homopolymers, ethylene copolymers with at least one linear or branched C4-C12 alpha-olefin, and mixtures thereof. Preferably, said alpha-olefin may be selected from butene, hexene, octene, decene, dodecene and mixtures thereof; more preferably 1-butene, hexene, octene and mixtures thereof; even more preferably octene.

The ethylene polymer comprised in the external layer (A) may be at least one ethylene copolymer comprising ≤ about 50% by weight, preferably about 15-35%, more preferably about 20-30%, of at least one alpha-olefin as described above.

The ethylene polymer comprised in the external layer (A) may be at least one ethylene copolymer having density < about 0.910 g/cm$^3$, preferably ≤ about 0.900 g/cm$^3$, more preferably about 0.860 - 0.900 g/cm$^3$, even more preferably about 0.870 - 0.900 g/cm$^3$.

According to a particularly preferred embodiment, the external layer (A) may comprise a linear low-density polyethylene (LLDPE) having at least one of the features indicated above, preferably all of the features indicated above. Linear low-density polyethylene is an ethylene polymer with a reduced content of long branched chains and a high content of short branches, when compared to low-density polyethylene (LDPE).

According to one embodiment, the ethylene polymers described above may further comprise at least one comonomer derived from at least one C4-C20 diene, preferably selected from a linear diene (preferably conjugated linear diene), a branched diene (preferably conjugated branched diene), a cyclic diene, a vinylcycloalkene, a vinyl aromatic diene, a heteroaromatic diene, a vinyl heteroaromatic diene and mixtures thereof. The term "heteroaromatic" refers, in the present description and appended claims, to an aromatic compound in which at least one carbon atom of the aromatic ring is substituted by a heteroatom selected from **N,** O and S. Optionally, at least one of the hydrogen atoms of the aromatic or heteroaromatic rings of the compounds described above may be substituted with at least one group selected from a linear or branched C1-C12 alkyl and a linear or branched C2-C12 alkenyl.

The conjugated diene may be selected from 1,3-butadiene, 2-methyl-1,3-butadiene, 1,3-pentadiene, 1,3-hexadiene, 1,3-octadiene, 2,4-decadiene and mixtures thereof. The non-conjugated diene may be selected from 1,4-hexadiene, 7-methyl-1,6-octadiene and mixtures thereof. The cyclic diene may be selected from cyclopentadiene, 5-ethylidene-2-norbornene and mixtures thereof. The vinylcycloalkene may be selected from 4-vinylcyclohexene, 1-vinylcyclohexene, 3-vinylcyclohexene and mixtures thereof. The vinyl aromatic diene may be styrene, divinylbenzene and mixtures thereof.

Preferably, the at least one comonomer deriving from at least one diene may be comprised in the ethylene polymers described above in quantities of about 0.05-25% by weight, preferably of about 0.05-10% by weight, more preferably of about 0.1-3% by weight.

The ethylene polymers described above may be prepared by polymerisation with Ziegler-Natta catalysts or, and preferably, with metallocenes based catalysts, according to processes known in the art. Said polymers are also available on the market.

According to one embodiment, the external layer (A) may comprise at least one slip agent and/or antiblocking agent, preferably selected from:

- an organic slip agent and/or antiblocking agent, more preferably polymethylmethacrylate (PMMA), optionally in the form of spherical particles having a mean diameter of about 2-8 $\mu$m, preferably 3-5 $\mu$m;
- an organic-inorganic slip agent and/or antiblocking agent, more preferably a polyorganosiloxane;
- an inorganic slip agent and/or antiblocking agent, more preferably silica, optionally in the form of spherical particles having a mean diameter of about 2-8 $\mu$m, preferably 3-5 $\mu$m; and
- mixtures thereof.

Generally, the slip agents and/or antiblocking agents may be added to the ethylene polymer in the form of at least one masterbatch composition comprising about 3-30% by weight of slip agent and/or antiblocking agent with respect to the weight of the masterbatch itself, the remaining part of the masterbatch composition being a propylene polymer.

According to one embodiment, the slip and/or antiblocking masterbatch may be selected from Polybatch® ABVT 26 NSC (A. Schulman Inc.), Polybatch® ABVT 30 NSC (A. Schulman Inc.), Constab AB 06001 PP (Constab Polyolefin Additives GmbH), Skiblock 10 (Ampacet Corp.) and mixtures thereof.

Preferably, the total quantity of slip and/or antiblocking masterbatch composition that may be added to the ethylene polymer of the external later (A) is comprised in the range of about 5-15% by weight, preferably about 7-12% by weight, with respect to the total weight of the external layer (A).

The ethylene polymer used to make the external layer (A) in combination with the slip and/or antiblocking agents described above improves the scratch resistance properties of the external layer (A) of the biaxially oriented multilayer film according to the invention. Such property is particularly important for multilayer films used as over-packing since the external layer (A) slides at high speed on the rigid sliding surfaces (generally made of metal) of the naked collation packages production lines. A high scratch resistance of the layer in contact with the sliding surfaces minimises production waste due to scratches on the external surface of the naked collated package.

The central layer (B) of the biaxially oriented multilayer film comprises at least one propylene polymer having the melting point indicated above, wherein at least one propylene polymer may be selected from propylene homopolymers, propylene copolymers with at least one alpha-olefin selected from ethylene and C4-C12 alpha-olefins, preferably linear or branched C4-C8 alpha-olefins, and mixtures thereof. Preferably, the at least one alpha-olefin may be selected from ethylene, butene, preferably 1-butene, hexene, octene and mixtures thereof. The total quantity of the at least one comonomer selected from butene, preferably 1-butene, hexene, octene and mixtures thereof in the propylene copolymer may be ≤ about 40% by weight, preferably about 10-30% by weight, more preferably about from 20% to 28% by weight. The quantity of ethylene may be comprised in the range of about 0.05-10% by weight, preferably about 0.5-7% by weight, more preferably about 0.5-3% by weight.

Preferably, the central layer (B) may comprise at least one propylene homopolymer as described above.

According to one embodiment, the central layer (B) may further comprise at least one amorphous hydrocarbon resin. Said resin may have a softening point of about 130°-180°C, more preferably of about 130°-160°C, determined according to the ASTM E28 method. Preferably, said hydrocarbon resins may be low molecular weight hydrocarbon resins, in which the number average molecular weight is comprised between 200-1000. According to one embodiment, the amorphous hydrocarbon resin may be selected from a resin obtained from the polymerisation of styrene, methylstyrene, vinyltoluene, indene, pentadiene, cyclopentadiene and mixtures thereof. Hydrogenated resins are preferred, in particular cyclopentadiene hydrogenated resins.

The amorphous hydrocarbon resins may be mixed in the molten state with the at least one propylene polymer of the central layer (B) in the form of a masterbatch composition in which the quantity of resin may be about 40-60% by weight with respect to the total weight of the masterbatch composition, the remaining part being a propylene polymer, preferably a propylene homopolymer. Generally, the central layer (B) may comprise about 10-20% by weight of said masterbatch composition, preferably about 12-15% by weight, with respect to the total weight of the central layer (B).

When the central layer (B) comprises an amorphous hydrocarbon resin, preferably the central layer (B) may comprise at least one propylene homopolymer as described above.

According to one embodiment, the central layer (B) may comprise ≤ about 15% by weight with respect to the total weight of the central layer (B), preferably about 10-15% by weight, of at least one regranulated propylene polymer, i.e. of at least one propylene polymer as described above obtained from mechanical recycling operations of at least one propylene polymer. The regranulated propylene polymers may only be used in the central layer (B) if they do not alter the optical properties of the film according to the invention.

Optionally, the central layer (B) may comprise further additives to improve mechanical performance. In particular, the central layer (B) may comprise ≤ about 5% by weight with respect to the total weight of the central layer (B), preferably about 1-4% by weight of a masterbatch composition comprising at least one antistatic agent.

The propylene polymers useful for the preparation of the central layer (B) may be prepared by polymerisation with Ziegler-Natta catalysts or with metallocenes based catalysts, according to processes known in the art. Said polymers are also available on the market.

The at least one ethylene polymer comprised in the internal layer (C) may be at least one low-density polyethylene (LDPE). LDPE is an ethylene polymer with a high content of long branched chains, obtained or obtainable by high pressure radical polymerisation.

Said LDPE may be selected from ethylene homopolymers, ethylene copolymers with at least one linear or branched C4-C12 alpha-olefin, and mixtures thereof. Preferably, said alpha-olefin may be selected from butene, hexene, octene, decene, dodecene and mixtures thereof; more preferably 1-butene, hexene, octene and mixtures thereof; even more preferably octene.

The LDPE suitable for the internal layer (C) is available on the market. The ethylene copolymer of the internal layer (C) may comprise ≤ about 50% by weight, preferably about 15-35% by weight, more preferably about 20-30% by weight, of at least one alpha-olefin as described above.

According to one embodiment, the at least one ethylene polymer comprised in the internal layer (C) may further comprise at least one comonomer derived from at least one C4-C20 diene, preferably selected from a linear diene (preferably conjugated linear diene), a branched diene (preferably conjugated branched diene), a cyclic diene, a vinylcycloalkene, a vinyl aromatic diene, a heteroaromatic diene, a vinyl heteroaromatic diene and mixtures thereof.

Optionally, at least one of the hydrogen atoms of the aromatic or heteroaromatic rings of the compounds described above may be substituted with at least one group selected from linear or branched C1-C12 alkyl and linear or branched C2-C12 alkenyl.

The conjugated diene may be selected from 1,3-butadiene, 2-methyl-1,3-butadiene, 1,3-pentadiene, 1,3-hexadiene, 1,3-octadiene, 2,4-decadiene and mixtures thereof. The non-conjugated diene may be selected from 1,4-hexadiene, 7-methyl-1,6-octadiene and mixtures thereof. The cyclic diene may be selected from cyclopentadiene, 5-ethylidene-2-norbornene and mixtures thereof. The vinylcycloalkene may be selected from 4-vinylcyclohexene, 1-vinylcyclohexene, 3-vinylcyclohexene and mixtures thereof. The vinyl aromatic diene may be styrene, divinylbenzene and mixtures thereof.

Preferably, the at least one comonomer derived from at least one diene may be comprised in the ethylene polymers of the internal layer (C) in quantities of about 0.05-25% by weight, preferably of about 0.05-10% by weight, more preferably of about 0.1-3% by weight.

The low-density polyethylene comprised in the internal layer (C) may be characterised by low haze values, preferably ≤ about 8%, said values being measured according to standard ASTM D1003 on a film with a thickness of 50 μm consisting essentially of the low-density polyethylene comprised in the layer (C) and inevitably present technological additives.

According to one embodiment, the internal layer (C) may comprise at least one slip agent and/or antiblocking agent, preferably selected from:

- an organic-inorganic slip agent and/or antiblocking agent, more preferably a polyorganosiloxane (silicone oil);
- an inorganic slip agent and/or antiblocking agent, more preferably silica, optionally in the form of spherical particles having a mean diameter of about 2-8 μm, preferably about 3-5 μm; and
- mixtures thereof.

Generally, the slip agents and/or antiblocking agents may be added to the at least one ethylene polymer in the form of at least one masterbatch composition comprising about 3-30% by weight of slip agent and/or antiblocking agent with respect to the weight of the masterbatch composition itself, the remaining part of the masterbatch being a propylene polymer.

According to one embodiment, the slip and/or antiblocking masterbatch may be selected from Skiblock 10 (Ampacet Corp.), Polybatch® IL1612EM (A. Schulman Inc.), SAB 06576 PPR (Constab Polyolefin Additives GmbH) and mixtures thereof.

The total quantity of slip and/or antiblocking masterbatch composition that may be added to the at least one ethylene polymer of the internal later (C) may be comprised in the range of about 1-10% by weight, preferably about 3-8% by weight, with respect to the total weight of the internal layer (C).

The biaxially oriented multilayer film according to the invention may be obtained by sequential flat film biaxial orientation, wherein the multilayer film is stretched in MD direction and subsequently in TD direction on a tenter-frame line. Alternatively and preferably, the multilayer film of the invention may be obtained by a simultaneous biaxial orientation process, i.e. by a simultaneous tubular film biaxial orientation process (the "double bubble" process) or by simultaneous flat film biaxial orientation process without contact with metal rollers.

Preferably, the biaxially oriented multilayer film of the invention may be obtained by a simultaneous flat film biaxial orientation process comprising extrusion and subsequent simultaneous biaxial stretching of the film in the machine direction (MD) and in the direction transverse to the machine (TD).

Therefore, in a further aspect, the present invention relates to a process for producing the biaxially oriented multilayer film as described above comprising at least three layers A/B/C, wherein said process comprises the steps of:

(i) co-extruding, preferably in a flat die extruder, the components comprised in the at least three layers (A), (B) and (C), obtaining a multilayer sheet;
(ii) quenching said multilayer sheet on a roller at a temperature of about 10°-40°C;
(iii) heating said multilayer sheet with heating elements wherein said heating elements are maintained at a temperature of about 100°-500°C;
(iv) subjecting said multilayer sheet to simultaneous biaxial stretching without contact with metal rollers at a temperature of about 80°-210°C, with transverse (TD) and longitudinal (MD) stretching ratios independently selected in the range of about 3-10, obtaining a biaxially oriented multilayer film; and
(v) cooling the biaxially oriented multilayer film.

During step (i) the components described above comprised in the at least three layers (A), (B) and (C) are co-extruded so as to form a multilayer sheet having a thickness of about 1-4 mm.

Subsequently, in step (ii) the multilayer sheet is quenched on a metal roller maintained at a temperature of 10°-40°C.

During step (iii) the multilayer sheet is heated with radiating elements, preferably with infra-red rays, maintained at a temperature of about 100°-500°C.

In step (iv) the multilayer sheet is subjected to simultaneous biaxial stretching without contact with metal rollers, i.e. without placing the multilayer sheet directly in contact with heated surfaces during the stretching operation. Preferably, to actuate step (iv) a simultaneous biaxial stretching on flat die filming process may be used, even more preferably, for this step, the Lisim® (Linear Motor Simultaneous Stretching) process may be used. This technology uses a simultaneous biaxial stretching process, for example as described in US4,853,602 and subsequent patents. During the simultaneous biaxial stretching step (iv) the edges of the sheet are coupled to the stretching frame by means of a series of grippers or clamps independently guided by synchronous linear induction motors, each gripper or clamp sliding on a rail and being drawn by a permanent magnet or by a pair of permanent magnets, pushed by the magnetic wave created by the polar expansions of the motors; each section of the stretching frame having a series of synchronous linear induction motors arranged contiguously supplied by alternating currents with phase and frequency modulated so as to continuously vary the speed of the clamps (or grippers) and therefore the longitudinal stretching ratios of the film; the transverse stretching ratios being adjusted by changing the divergence of the rails on which the grippers or clamps slide.

The stretching frame comprises one or more sections situated inside an oven, maintained at a temperature of about 80°-210°C, preferably about 120°-180°C.

During the stretching step (iv), the longitudinal (MD) and transverse (TD) stretching ratios can be selected independently in the range of about 3-10, preferably about 5.5 - 8.

The longitudinal stretching ratio (MD) is defined by the ratio between the outlet speed of the multilayer film from the stretching frame (oven) and the inlet speed of the multilayer sheet into the stretching frame (oven).

The transverse stretching ratio (TD) is defined by the ratio between the width of the multilayer film at the outlet of the stretching frame (oven) and the width of the film at the inlet of the stretching frame (oven).

During step (v) of the process, the biaxially oriented multilayer film may be cooled using air at a temperature of about 25°-60°C, maintaining the stretching ratios in MD and TD constant.

The possibility allowed by the simultaneous stretching apparatus to vary the longitudinal stretching ratio (MD) within a wide range of values allows improved mechanical properties of the multilayer film in the longitudinal direction to be obtained. Such improved mechanical properties in the longitudinal direction make the multilayer film according to the invention particularly suitable for use in processes for obtaining naked collation packages that use machines operating at extremely high speeds such as, for example, machines for packaging naked collation packages containing cigarettes, which can reach speeds of 70-100 "naked collation packages"/minute.

According to one embodiment, step (iv) of the process may comprise at least three sub-steps of:

(iv.a) preheating: heating the multilayer sheet to the temperature of about 150°-180°C maintaining the speed and the width of the sheet constant (i.e. maintaining the stretching ratios in MD and TD both equal to 1);
(iv.b) stretching: subjecting the multilayer sheet to simultaneous biaxial stretching at the temperature of about 120-165°C, bringing the longitudinal (MD) and transverse (TD) stretching ratios to values independently selected in the range of about 3 - 10, preferably about 5.5 - 8; and
(iv.c) stabilisation: maintaining the biaxially oriented multilayer film at a temperature of about 120°-180°C reducing the stretching ratio in the MD direction and in the TD direction.

Steps (iv.a), (iv.b) and (iv.c) are actuated inside the stretching frame, without placing the sheet and the film in contact with metal rollers.

By appropriately reducing the stretching ratios both in the TD direction and in the MD direction during sub-step (iv.c) it is possible to obtain a biaxially oriented multilayer film that is heat-shrinkable or heat-set in at least one direction (MD and/or TD).

Therefore, the biaxially oriented multilayer film according to the present invention may be a biaxially oriented multilayer film being heat-shrinkable or heat-set in at least one direction (MD and/or TD); preferably the biaxially oriented multilayer film may be heat-shrinkable in both directions (MD and TD).

The biaxially oriented multilayer film may have independently selected MD and TD heat-shrinkage values in the range of about 5-30%, preferably about 7-15%, more preferably about 8-13%, these values been determined as described below.

To obtain a heat-shrinkable biaxially oriented film in MD and/or TD, step (iv) of the process according to the invention may comprise at least the following sub-steps of:

(iv.a1) preheating: heating the multilayer sheet to the temperature of about 150°-180°C, preferably 155°-165°C, maintaining the speed and the width of the sheet constant (i.e. maintaining the stretching ratios in MD and TD both equal to 1);
(iv.b1) stretching: subjecting the multilayer sheet to simultaneous biaxial stretching at the temperature of about 120°-165°C, preferably about 125°-145°C, bringing the longitudinal (MD) and transverse (MD) stretching ratios to independently selected values in the range 3-10, preferably about 5.5 - 8; and
(iv.c1) stabilisation: maintaining the biaxially oriented multilayer film at a temperature of about 120°-180°C, preferably about 125°-145°C reducing the stretching ratio in MD and/or in TD by values independently about < 15% with respect to the maximum stretching ratio value in the same direction used in step (iv.b1).

To obtain a biaxially oriented film heat-set in MD and/or TD, step (iv) of the process according to the invention may comprise at least the following sub-steps of:

> (iv.a2) preheating: heating the multilayer sheet to the temperature of about 150°-180°C, preferably about 160°-175°C, maintaining the speed and the width of the sheet constant (i.e. maintaining the stretching ratios in MD and TD both equal to 1);
> (iv.b2) stretching: subjecting the multilayer sheet to simultaneous biaxial stretching at the temperature of about 120°-165°C, preferably about 150°-160°C, bringing the longitudinal (MD) and transverse (MD) stretching ratios to independently selected values in the range 3-10, preferably about 5.5 - 8; and
> (iv.c2) stabilisation: maintaining the biaxially oriented multilayer film at a temperature of about 120°-180°C, preferably about 150°-170°C reducing the stretching ratio in MD and/or in TD by values independently $\geq$ 15%, preferably $\geq$ 20% with respect to the maximum stretching ratio value in the same direction used in step (iv.b2).

The present invention further relates to a biaxially oriented multilayer film obtained or obtainable by a simultaneous film biaxial orientation process as described above, preferably by simultaneous flat film biaxial orientation process without contact with metal rollers. In particular, in one embodiment, the present invention relates to a heat-set or heat-shrinkable biaxially oriented multilayer film, preferably heat-shrinkable, in the MD and/or TD direction, obtained or obtainable by a simultaneous flat film biaxial orientation process without contact with metal rollers as described above.

The multilayer film according to the invention may have a total thickness comprised between 15 $\mu$m and 40 $\mu$m, thicknesses between 20 $\mu$m and 30 $\mu$m being particularly preferred. The external (A) and internal (C) layers may have the same or a different thickness from each other, said thickness preferably being of 0.3-4.0 $\mu$m, more preferably of 0.4-1.0 $\mu$m. The layers (A), (B) and/or (C) may also comprise further additives known in the art, in the quantities generally used in this sector, able to appropriately change the physical-mechanical properties of the multilayer film, as long as said additives do not alter the optical characteristics of the film itself. The usable additives may include, for example, antifog agents, generally added to the polymers comprised in the different layers in the form of masterbatches.

The biaxially oriented multilayer film according to the invention, is characterised by an optimal balance of physical-mechanical properties, both due to the polymer materials used for creating the different layers of film, and to the use of a simultaneous biaxial orientation process without contact with metal rollers for the production of the film itself.

Preferably, the multilayer film according to the invention possesses at least one of the following features:

- elastic modulus in MD and in TD $\geq$ about 2000 N/mm$^2$, preferably about 2000 - 3000 N/mm$^2$ in MD and about 2000 - 4000 N/mm$^2$ in TD; and/or
- tensile strength in MD $\geq$ about 160 N/mm$^2$, preferably about 170 - 230 N/mm$^2$; and/or
- tensile strength in TD $\geq$ about 200 N/mm$^2$, preferably about 200 - 250 N/mm$^2$; and/or
- ultimate elongation in MD and/or in TD $\leq$ about 120%, preferably about 70-120%.

According to a preferred embodiment, the multilayer film may have all the above-indicated features.

Furthermore, the multilayer film according to the invention associates excellent optical properties with the optimal physical-mechanical properties indicated above. The multilayer film according to the invention may be characterised by low haze values and high clarity values, in particular when made with a simultaneous film biaxial orientation process comprising a stretching technology without contact with metal rollers.

Accordingly, the multilayer film of the invention may have at least one of the following features:

- haze values $\leq$ 5.0%, more preferably $\leq$ 3.0%; and/or
- clarity values $\geq$ 97.0%, more preferably $\geq$ 98.0%; and/or
- gloss $\geq$ 65%, preferably $\geq$ 80%.

According to one embodiment, the biaxially oriented multilayer film may be characterised by haze, clarity and gloss values simultaneously comprised in the ranges indicated above.

The biaxially oriented multilayer film as described above may have sealing temperature in the range of about 90°-160°C, preferably of about 105°-155°C.

The strength of the sealing between the external layer (A) and the internal layer (C) of multilayer film according to the invention, measured according to the seal strength test method, may be $\geq$ about 300 g/25mm both in MD and in TD, preferably about 350 - 450 g/25mm.

Furthermore the multilayer film may further be characterised by low permeability to water vapour, preferably equal to or less than about 4.5 g/m$^2$-24h, more preferably equal to or less about 4.0 g/m$^2$-24h.

When obtained by simultaneous flat film biaxial orientation as described above, the multilayer film according to the invention may also have excellent compatibility between the central layer (B) and the internal layer (C), or between the internal layer (C) and the optional layers comprised between the internal layer (C) and the central layer (B). An indication on the compatibility between the internal layer (C) and the layer adjacent to it is provided by the peelability test: the higher the strength value of the sealing obtained by the peelability test, the higher the compatibility between the layers. Such high compatibility between the layers is due to the particular stretching process used for obtaining the film.

The biaxially oriented multilayer film according to the invention may comprise a variable number of layers placed between the central layer (B) and layers (A) and (C), as long as the external (A), central (B) and internal (C) layers are as described above and as long as the presence of said further layers does not alter the physical-mechanical and optical properties of the film itself. According to one embodiment, the multilayer film may comprise 2 or 4 further layers. Said further layers may comprise the same polymer materials comprised in layers (A), (B) or (C) or different polymer materials, for example selected from polyolefins, ethylene-vinyl acetate (EVA) polymers, ethylene-vinyl alcohol (EVOH) polymers, hydrocarbon resins, polyamides and mixtures thereof, optionally with the addition of compatibilizing polymer materials.

The external surface of the external layer (A) of the multilayer film may be treated according to methods known in the art for changing the surface properties of the film; for example corona or flame treated for increasing the surface tension and improving the printability and/or metallisability of the film, without altering its physical-mechanical characteristics and/or sealability.

The external layer (A) of the multilayer film according to the invention may also be printed through techniques known in the art (flexography, rotogravure, etc.), optionally using a primer to promote the adhesion of the ink to the surface.

The biaxially oriented multilayer film as described above is particularly suitable as over-packing for the creation of naked collation packages, in particular when the internal articles are individually wrapped in a polyolefin film.

Therefore, in a further aspect thereof, the present invention relates to a method for making a naked collation package comprising an external covering (over-packing) and a plurality of articles placed inside the external covering, characterised in that it comprises the use of the biaxially oriented multilayer film according to the invention as the external covering. Preferably, the articles comprised in the external covering may be individually wrapped in polyolefin film.

According to one embodiment, said polyolefin film may comprise at least one propylene polymer having a melting point of about 120°-165°C, preferably selected from propylene homopolymers, propylene copolymers with at least one alpha-olefin selected from ethylene and C4-C12 alpha-olefins, preferably linear or branched C4-C8 alpha-olefins, and mixtures thereof. Preferably, the at least one alpha-olefin may be selected from ethylene, butene, preferably 1-butene, hexene, octene and mixtures thereof. The total quantity of at least one comonomer selected from butene, preferably 1-butene, hexene, octene and mixtures thereof in the copolymer may be $\leq$ about 40% by weight, preferably about 10-30% by weight, more preferably about 20% to 28% by weight. The quantity of ethylene may be comprised in the range of about 0.05-10% by weight, preferably about 0.5-7% by weight, more preferably about 0.5-3% by weight.

Preferably, the polyolefin film may comprise at least one propylene homopolymer having the properties described above.

According to a preferred embodiment, the method for making a naked collation package may comprise the steps of:

(1) providing a plurality of articles arranged in an ordered configuration, wherein said articles are individually wrapped in a polyolefin film;
(2) providing a biaxially oriented multilayer film as previously described;
(3) wrapping the biaxially oriented multilayer film around the ordered configuration of articles, realising a tubular covering having two superposed edges and two open ends, wherein the internal layer (C) of said biaxially oriented multilayer film is facing towards the inside of the naked collation package;
(4) closing said covering by hot-sealing the superposed edges at a temperature of about 100°-145°C, preferably about 110°-140°C, more preferably about 115°-140°C;
(5) closing the open ends of said covering by superposing and hot-sealing said open ends at a temperature of about 100°-145°C, preferably about 110°-140°C, more preferably about 115°-140°C, making the naked collation package.

According to one embodiment, in step (1) the ordered configuration of articles may be an ordered configuration of cigarette packets, preferably of at least 10 cigarette packets, individually wrapped in a polyolefin film.

According to a preferred embodiment, the articles may be individually wrapped in a polyolefin film having a melting point of about 120°-165°C. Said polyolefin film may comprise at least one propylene polymer selected from propylene homopolymers, propylene copolymers with at least one alpha-olefin selected from ethylene and C4-C12 alpha-olefins, preferably linear or branched C4-C8 alpha-olefins, and mixtures thereof. Preferably, the at least one alpha-olefin may be selected from ethylene, butene, preferably 1-butene, hexene, octene and mixtures thereof. The total quantity of at least one comonomer selected from butene, preferably 1-butene, hexene, octene and mixtures thereof in the copolymer may be $\leq$ about 40% by weight, preferably about 10-30% by weight, more preferably about 20% to 28% by weight. The quantity of ethylene may be comprised in the range of about 0.05-10% by weight, preferably about 0.5-7% by weight, more preferably about 0.5-3% by weight.

Preferably, the polyolefin film may comprise at least one propylene homopolymer having the properties described above.

According the one embodiment, the polyolefin film wrapping the single packets may be a multilayer film wherein at least the external layer which is placed in contact with the biaxially oriented multilayer film of the invention is as described above.

In step (3) of the method described above, the multilayer film according to the invention is wrapped around the ordered configuration of articles forming a tubular covering so that the internal layer (C) of multilayer film is placed in contact with the polyolefin film that wraps the individual articles. During step (5) the open ends of the tubular covering may be closed by performing an envelope closure.

Optionally, at the end of step (5) a further step (6) may be performed which comprises inducing the heat-shrinking of the external covering, preferably placing the external covering in contact with at least one bar heated to a temperature of about 100°-130°C.

In a further aspect, the present invention relates to a naked collation package obtained or obtainable using the method described above.

The present invention further relates to a naked collation package wherein the articles comprised in the external covering are preferably individually wrapped in a polyolefin film, said naked collation package comprising the biaxially oriented multilayer film as described above as an external covering, preferably placed at direct contact with the internal packets. According to one embodiment, the present invention relates to a naked collation package in which the external covering consists of the biaxially oriented multilayer film as described above, preferably placed at direct contact with the internal packets. According to a particularly preferred embodiment, the naked collation package may be a pack of cigarette packages.

The use of the multilayer film previously described as an external covering allows the easy opening of the naked collation package, while guaranteeing its compactness and stability of the pack thanks to the high strength of the sealing of the external multilayer film.

Furthermore, the material comprised in the internal layer (C) of the multilayer film according to the invention allows not only a naked collation package to be realised wherein during steps (4) and/or (5) the external covering is not sealed to the polyolefin film wherein the articles of the ordered configuration are individually wrapped, but also a naked collation package wherein the sticky effect between the external covering and the polyolefin film in which the internal articles are individually wrapped is extremely reduced or removed.

Moreover, the biaxially oriented multilayer films of the invention are endowed with a peculiar "soft peel opening" effect.


## TEST METHODS

Haze: ASTM D1003

Clarity: ASTM D1746-15

Gloss: ASTM D2457

Film thickness: cut out from the sample 10 test specimens with dimensions 100x100 mm and cumulatively weigh the 10 test specimens with an analytical balance. Determine the grammage of each test specimen using the formula:

$$\text{grammage } [g/m^2] = (\text{Weight of cut sheets } [g] \times 100)$$

determine the thickness of each test specimen using the formula:

thickness = grammage/0.91

Heat-shrinkage: instrument: MEMMERT ULE 500 air oven. Cut out from the film 3 test specimens of $100 \times 100$ mm and mark each one with two perpendicular lines between them to identify the measuring area. Exactly measure the dimensions of the test specimens with a Hirlinger ruler (0.1 mm approximation) along the reference lines and position the test specimens in the sample holder grid of the instrument. Place the test specimens in the oven at the temperature of 130°C ($\pm$2°C) for 15 min. Take the specimens out of the oven and leave them to cool to ambient temperature. Measure the dimensions of each test specimen along the reference lines. The heat-shrinkage value in MD or TD, expressed as a percentage, is provided by the mean of the values calculated for each test specimen using the following formula:

$$[(A - B)/A] * 100$$

A = initial size of the test piece.
B = final size of the test piece.

The shrinkage of the film due to the effect of the temperature is indicated by a positive number. The relaxation of the film due to the effect of the temperature, which corresponds to an increase of the original dimensions of the test specimen, is indicated by a negative number.

Elastic modulus - tensile strength - ultimate elongation: ASTM D882. Sealability range: Equipment: BRUGGER HSG-C sealing machine (or equivalent) equipped with Crimper type knurled bars; INSTRON dynamometer series 4464 (or equivalent). Cut out from each film samples of 150x150 mm. Seal according to the direction to be analysed (MD and/or TD) the external layer (A) and the internal layer (C) of each sample (IN/OUT), setting the following operating conditions on the sealing machine:

pressure = 400 g/cm$^2$;
contact time = 0.6 sec
sealing temperature = from 100°C to the melting point of the test specimen, $\Delta T$ = 5°C (both bars heated to the test temperature).

Cut out from each sealed sample at least 7 test specimens of 10x150 mm to be subjected to traction. Subject each of the 7 test specimen coming from the same sample to traction under the following test conditions:

- initial distance between the crosspieces: 5 cm;
- speed of the crosspieces: 500 mm/min.

Discard the maximum and minimum value obtained for each series of test specimens coming from the same sample. The seal strength of each sample at the test temperature is mean value of the remaining 5 values. The lower limit of the sealability range (lower limit of the sealing temperature range) is defined by the temperature at which the seal strength is $\geq$ 300g/25mm; the upper limit of the sealability range (upper limit of the sealing temperature range) is defined by the temperature at which the sample melts during sealing.

Seal strength: Equipment: BRUGGER HSG-C sealing machine (or equivalent) equipped with Crimper knurled type bars; INSTRON dynamometer series 4464 (or equivalent). Cut out from each film test samples of 150x150 mm. Seal according to the direction to be analysed (MD and/or TD) the external layer (A) and the internal layer (C) of each sample (IN/OUT), setting the following operating conditions on the sealing machine:

pressure = 400 g/cm$^2$;
contact time = 0.6 sec
sealing temperature =110°C (both bars heated to the test temperature).

Cut out from each sealed sample at least 7 test specimens of 10×150 mm to be subjected to traction. Subject each of the 7 test specimens coming from the same sample to traction under the following test conditions:

- initial distance between the crosspieces: 5 cm;
- speed of the crosspieces: 500 mm/min.

Discard the maximum and minimum value obtained for each series of test pieces coming from the same sample. The seal strength of each sample at the test temperature comes from the mean of the remaining 5 values. The seal strength is expressed in g/25mm and indicates the necessary force for opening the seal.

Water vapour permeability: ASTM F1249 at 38°C and 90% relative humidity.

Scratch resistance: five test specimens of 64x127 mm, in which the long side of the test specimen is cut out in the longitudinal direction (MD), are cut out from a sample of film. Wrap the test piece in the length direction on the slide of the instrument used for measuring the coefficient of friction (COF) according to standard ASTM D1894, from which the smooth metal surface used for the COF measurement has been removed, the side of the test piece to be tested facing outwards. After removing any creases on the test piece, join the short sides of the test piece with adhesive tape. The specimen is tested making the slide (weight 200 grams) run on the rough surface of the plate at the speed of 150 mm/min. To determine the scratch resistance, the area of each test specimen that appears to be scratched is assessed. Transfer each test specimen onto a glossy sheet, with the surface subjected to testing facing upwards and fix the test specimen onto the sheet with adhesive tape, without covering the scratched part. Metallise the surface of the test specimen.

Cover the metallised test specimens with a second glossy sheet (hereinafter: upper glossy sheet), superposing it with the first and holding the sheets in place with adhesive tape. Delimit on the upper glossy sheet the outline of the scratched areas. The scratched areas appear as light coloured areas (stains), on a uniform metallised surface.

Determine the total surface of the scratched areas, for example using millimetre-marked paper (in this case, the calculation of the total area must also consider the squares that fall within the only partially scratched area). On the upper glossy sheet colour the scratched areas previously identified; rest a sheet of millimetre-marked paper on the upper glossy sheet and count the number of squares that are filled, also only partially by the coloured areas.

The scratch resistance of each test specimen is expressed as a percentage of scratched surface with respect to the total surface area of each test specimen subjected to the test, and is provided by the following formula

$$(A/B) * 100$$

wherein:

A is the total surface area of the scratched areas of each test specimen;
B is the total surface area of each test specimen subjected to the test.

The scratch resistance value is taken from the mean of the values obtained on the different test specimens. It is considered that test specimens are "free" from scratches when the scratched surface is less than 25% with respect to the total surface area of the test specimen subjected to the test.

Scratch intensity: measure the haze value of a sample of film to be tested according to the method indicated above. Scratch five test specimens for each sample of film to be tested according to the method previously described for measuring the scratch resistance (no metallisation). Measure the haze value of the scratched surface of each test specimen.

The scratch intensity of each test specimen is expressed by the following formula

$$[(A - B)/B] * 100$$

wherein:

A = Haze measured on five scratched test specimens;
B = Haze measured on the sample as it is, before scratching.

Peelability test - Equipment: sealing machine NDS Brugger 241 Mod. 1999 equipped with flat bars; **INSTRON** dynamometer series IX. Cut out from each film test samples of 150x150 mm. Superimpose the test samples of the multilayer film in a IN/OUT configuration (external layer (A) in contact with the internal layer (C)) and seal the film placing the external layer (A) in contact with the heated lower bar and the internal layer (C) in contact with the unheated upper bar, operating the sealing machine in the following conditions:

pressure = 0.35 N/cm$^2$;
contact time = 0.3 sec

Cut out from each sealed sample a test specimen of 10x150 mm to be subjected to traction under the following test conditions:

- initial distance between the crosspieces: 50 mm;
- speed of the crosspieces: 150 mm/min.

Record the values of the seal strength of each test specimen (g/25mm) at pre-determined intervals of 20 values per second (20 pt/sec.).

**EXAMPLES**

The examples below are provided to illustrate the invention, but without thereby limiting the scope thereof.

**Example 1**

The multilayer film having the composition shown in Table 1a and in Table 1b was obtained by co-extruding in a flat die extruder operating under the conditions indicated in Table 2 a sheet having the same composition as the multilayer film and a total thickness of about 1.1 mm.

The co-extruded sheet was quenched on a roller set by a thermostat at a temperature of about 30°C, immersed for a third of the volume of the roller in a tank of water at the temperature of 39°C.

The sheet was heated by means of infra-red panels to temperatures comprised between 160°C and 270°C.

Subsequently, the sheet was subjected to simultaneous biaxial stretching without contact with rollers on a LISIM® production line, under the operating conditions indicated in Table 3.

At the outlet from the stretching oven, the multilayer film was cooled, trimmed and subjected to X-ray scanning to assess the film thickness distribution uniformity. The film was then wrapped into reels.

At the end of the stretching process, the multilayer film had a total thickness of 25 μm; both the external layer (A) and the internal layer (C) each had a thickness of about 0.6 μm.

| Table 1a - film composition | | |
|---|---|---|
| | **% by weight** | **Component** |
| external layer (A) | 90 | Affinity PF1140G (DOW) |
| | 8 | masterbatch Polybatch™ ABVT 30 NSC (A. Schulman Inc.) |
| | 2 | masterbatch Skiblock 10 (Ampacet Corp.) |
| | | |
| central layer (B) | 83 | Moplen™ HP522H (LyondellBasell) |
| | 15 | amorphous resin masterbatch MA 00929 PP (Constab Polyolefin Additives GmbH) |
| | 2 | antistatic masterbatch Anstat 400-565 (Ampacet Corp.) |
| | | |
| internal layer (C) | 95 | Lupolen™ 3020H Plus (LyondellBasell) |
| | 4 | masterbatch Polybatch IL 1612 EM (A. Schulman Inc.) |
| | 1 | masterbatch Skiblock 10 (Ampacet Corp.) |

| Table 1b - characteristics of film components | | |
|---|---|---|
| Affinity PF1140G (DOW) - LLDPE | | |
| melting point | ISO 11357 | 96.1°C |
| density | ASTM D792 | 0.897 g/cm$^3$ |
| MFR | ASTM D1238 | 1.6 (dg/min; 2.16 Kg/190°C) |
| Moplen™ HP522H (LyondellBasell) - propylene homopolymer | | |
| melting point | ISO 11357-3[1] | 163°C |
| MFR | ISO 1133-1 | 2.0 (g/10 min; 2.16 Kg/230°C) |
| Lupolen™ 3020H (LyondellBasell) - LDPE | | |
| melting point | ISO 3146 | 114°C |
| density | ISO 1133-1 | 0.928 g/cm$^3$ |
| MFR | ISO 1133-1 | 2.0 (g/10 min; 2.16 Kg/190°C) |
| [1] DSC method with temperature gradient of 20°C both for heating and cooling. | | |

| Table 2 - sheet extrusion conditions | | | |
|---|---|---|---|
| | external layer (A) | central layer (B) | internal layer (C) |
| Extrusion lines temp.(°C) | 130-195 | 230-260 | 160-250 |

(continued)

| Table 2 - sheet extrusion conditions | | | |
|---|---|---|---|
| | external layer (A) | central layer (B) | internal layer (C) |
| Extrusion die temp. (°C) | 245 | | |

| Table 3 - stretching conditions | | |
|---|---|---|
| stretching ratio (MD/TD) | | 6.50/6.99 |
| film speed at oven outlet | m/min. | 243 |
| stretching ratio decrease (MD/TD) | % | < 15/<15 |
| pre-heating section temp. | °C | 155 - 165 |
| stretching section temp. | °C | 125 - 145 |
| stabilisation section temp. | °C | 125 - 145 |

The mechanical and optical properties of the multilayer film are shown in Table 4.

| Table 4 - multilayer film properties | | |
|---|---|---|
| elastic modulus (MD/TD) | $N/mm^2$ | 2650/3070 |
| tensile strength (MD/TD) | $N/mm^2$ | 179/225 |
| ultimate elongation (MD/TD) | % | 104/80 |
| Heat-shrinkage (MD/TD) | % | -12 / -10 |
| Sealability range | °C | 110°-155° |
| Seal strength (MD/TD) | g/25mm | 360/360 |
| Haze | % | 2.8 |
| Clarity | % | 98.2 |
| Gloss | % | 83 |
| Water vapour permeability | $g/m^2$ 24h | 4.0 |

**Example 2**

The biaxially oriented multilayer film of example 1 was tested in industrial equipment for the production of packs of cigarette packets.

For producing each naked collation package, 10 packets of cigarettes individually wrapped in a polypropylene homopolymer film were arranged in 2 superposed rows each comprising 5 packets adjacent to each other along the longest side, to form an ordered configuration (pack).

The biaxially oriented multilayer film of example 1 was wrapped by the machine around each pack of cigarette packets, creating a tubular covering having two superposed edges (long side). The internal layer (C) of the multilayer film was facing the inside of the naked collation package. The superposed edges are sealed by a sealing bar at a temperature comprised between 105° and 140°C.

Subsequently, the machine folds the open ends of the over-packing at the two short ends of the pack and seals said the ends at the same temperature indicated above, closing the over-packing.

The superior mechanical qualities of the multilayer film guaranteed that, during the implementation of the test, the operation of the equipment was not compromised, since no machine downtime occurred due to breakage of the multilayer film.

The naked collation packages created during the test were opened through slight twisting of the carton with hands and no stickiness was observed between the multilayer film and the polyolefin films that closed the individual packets.

The external surface of the film was not scratched.

**Example 3**

Using the same equipment and sealing conditions of the peelability test, the stickiness of the multilayer film of example 1 was tested sealed it to STILAN™ LTS20, a three layered film marketed by IRPLAST for use in wrapping single cigarette packets. The three-layered STILAN™ LTS20 has a core layer comprising a propylene homopolymer (HP522H, marketed by LyondellBasell) having melting point of about 163°C and the outer layers comprising propylene copolymers having melting point of about 132°C.

150x150 mm samples were cut out from each film. The multilayer film of example 1 was superimposed in a IN/OT configuration and the internal layer (C) contacted with STILAN™ LTS20. The films were sealed placing the external layer (A) of the multilayer film of the invention in contact with the heated lower bar and STILAN™ LTS20 in contact with the unheated upper bar, thereby simulating the hot-sealing conditions of an industrial packaging machine.

7 test specimens of 10x150 mm were cut form the sample and subjected to traction (INSTRON dynamometer series IX) under the following test conditions:

- initial distance between the crosspieces: 50 mm;
- speed of the crosspieces: 500 mm/min.

The seal strength of each test specimen was recorded. The stickiness of the multilayer film of the invention to STILAN™ LTS20 was calculated as the mean value of the 5 values remaining after discarding the maximum and minimum values obtained in the test.

The stickiness of the multilayer film of example 1 to STILAN™ LTS20 was 65.4 g/25mm.

**Example 4**

The multilayer film of example 1 was subjected to the peelability test described above, sealing the film to itself at a temperature of 140°C.

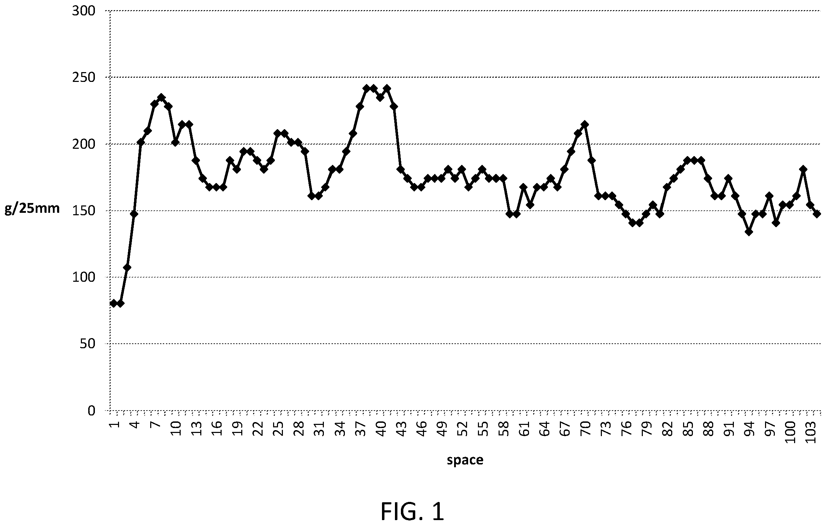

Figure 1 reports the variation of the peelability of the multilayer film as a function of the spacing between the crosspieces.

The rate of separation of the two crosspieces was maintained at 150 mm/min, thereby simulating the opening of a naked collation package. The sealing of the multilayer film opens at a (nearly) constant rate, thereby producing a "soft-peel opening" effect when the multilayer film opened with bare hands.

**Comparative example 5**

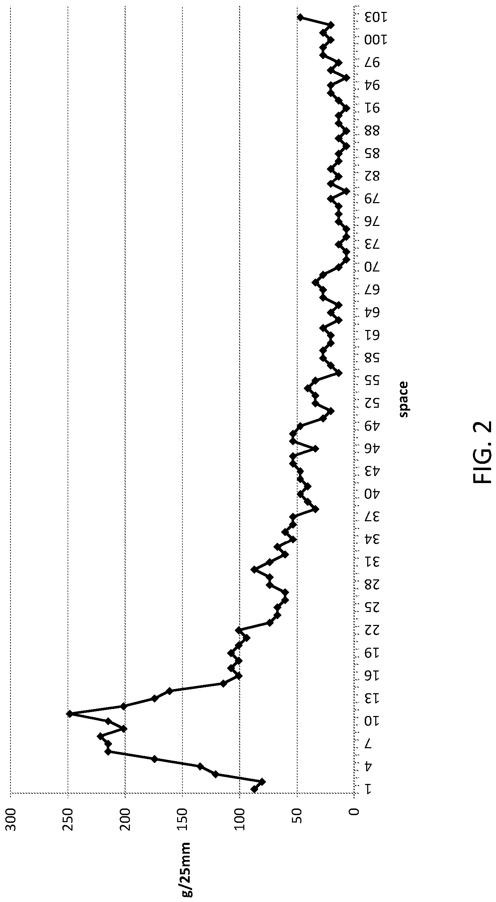

Example 1 of EP2520428 was reproduced, thereby obtaining a multilayer film having the same composition and structure of the film described therein. The film was subjected to the peelability test described above, sealing the film to itself at a temperature of 120°C. The sealing temperature was selected on the basis of the data reported in table 3 of EP2520428. Figure 2 reports the variation of the seal strength of the film as a function of the spacing between the crosspieces.

Even though the film seals to itself, the seal strength suddenly drops at low values indicating that the seal suddenly breaks with no "soft peel opening" effect.

**Claims**

1. A biaxially oriented multilayer film comprising at least three layers A/B/C, wherein:

   - the external layer (A) comprises an ethylene polymer having a melting point (Tf) $\leq$ 100°C, preferably 70°-100°C, more preferably 80°-100°C, still more preferably 90°-100°C;
   - the central layer (B) comprises a propylene polymer having a melting point (Tf) $\geq$ 140°C, preferably $\geq$ 160°C; and
   - the internal layer (C) comprises an ethylene polymer having a melting point (Tf) > 105°C and $\leq$ 115°C, preferably 110°-115°C, and a density of 0.910 - 0.940 g/cm$^3$, preferably 0.920 - 0.930 g/cm$^3$.

2. The biaxially oriented multilayer film according to claim 1, wherein the external layer (A) comprises at least one ethylene copolymer having density < 0.910 g/cm$^3$, preferably $\leq$ 0.900 g/cm$^3$, more preferably 0.860 - 0.900 g/cm$^3$, even more preferably 0.870 - 0.900 g/cm$^3$.

3. The biaxially oriented multilayer film according to claim 1 or 2, wherein the central layer (B) comprises at least one propylene homopolymer.

4. The biaxially oriented multilayer film according to claim 3, wherein the central layer comprises 10-20% by weight of a masterbatch, preferably 12-15% by weight, with respect to the overall weight of the central layer (B), comprising 40-60% by weight, with respect to the masterbatch, of at least one amorphous hydrocarbon resin.

5. The biaxially oriented multilayer film according to any one of claims 1-4, wherein the at least one ethylene polymer comprised in the internal layer (C) is a low-density polyethylene (LDPE).

6. The biaxially oriented multilayer film according to any one of claims 1-5, wherein the film has at least one of the following features:

   - elastic modulus in MD and in TD $\geq$ 2000 N/mm$^2$, preferably of 2000 - 3000 N/mm$^2$ in MD and of 2000 - 4000 N/mm$^2$ in TD; and/or
   - tensile strength in MD $\geq$ 160 N/mm$^2$, preferably of 170 - 230 N/mm$^2$; and/or
   - tensile strength in TD $\geq$ 200 N/mm$^2$, preferably of 200 - 250 N/mm$^2$; and/or
   - ultimate elongation in MD and/or in TD $\leq$ 120%, preferably of 70-120%.

7. The biaxially oriented multilayer film according to any one of claims 1-6, wherein the film has at least one of the following features:

   - haze $\leq$ 5.0%, more preferably $\leq$ 3.0%; and/or
   - clarity $\geq$ 97.0%, more preferably $\geq$ 98.0%.; and/or
   - gloss $\geq$ 65%, preferably $\geq$ 80%.

8. The biaxially oriented multilayer film according to any one of claims 1-7, wherein said biaxially oriented multilayer film is heat-shrinkable or heat-set in at least one direction, preferably heat-shrinkable in both directions.

9. A process for production of the biaxially oriented multilayer film according to any one of claims 1-8, comprising steps of:

   (i) co-extruding the components comprised in the at least three layers (A), (B) and (C), obtaining a multilayer sheet;
   (ii) quenching said multilayer sheet on a roller at the temperature of about 10°-40°C;
   (iii) heating said multilayer sheet with heating elements maintained at a temperature of about 100°-500°C;
   (iv) subjecting said multilayer sheet to simultaneous biaxial stretching without contact with metal rollers at the temperature of about 80°-210°C, with transverse (TD) and longitudinal (MD) stretching ratios chosen independently in the range of 3-10, obtaining a biaxially oriented multilayer film; and
   (v) cooling the biaxially oriented multilayer film.

10. The process according to claim 9 to obtain the biaxially oriented multilayer film heat-shrinkable in MD and/or TD, wherein step (iv) comprises the following sub-steps:

    (iv.a1) preheating: heating the multilayer sheet to the temperature of 150°-180°C, preferably 155°-165°C, maintaining the stretching ratios in MD and TD both equal to 1;
    (iv.b1) stretching: subjecting the multilayer sheet to simultaneous biaxial stretching at the temperature of 120°-165°C, preferably 125°-145°C, bringing the longitudinal (MD) and transverse (MD) stretching ratios to independently selected values in the range 3-10, preferably 5.5 - 8; and
    (iv.c1) stabilisation: maintaining the biaxially oriented multilayer film at a temperature of 120°-180°C, preferably 125°-145°C, reducing the stretching ratio in MD and/or in TD by values independently < 15% with respect to the maximum value of the stretching ratio in the same direction used in step (iv.b1).

11. The process according to claim 9 to obtain a biaxially oriented multilayer film heat-set in MD and/or TD, wherein step (iv) comprises the following sub-steps:

    (iv.a2) preheating: heating the multilayer sheet to the temperature of 150°-180°C, preferably 160°-175°C, maintaining the stretching ratios in MD and TD both equal to 1;
    (iv.b2) stretching: subjecting the multilayer sheet to simultaneous biaxial stretching at the temperature of 120°-165°C, preferably 150°-160°C, bringing the longitudinal (MD) and transverse (MD) stretching ratios to independently selected values in the range 3-10, preferably 5.5 - 8; and

(iv.c2) stabilisation: maintaining the biaxially oriented multilayer film at a temperature of 120°-180°C, preferably 150°-170°C, reducing the stretching ratio in MD and/or in TD by values independently ≥ 15%, preferably ≥ 20% with respect to the maximum value of the stretching ratio in the same direction used in step (iv.b2).

12. A method for realising a naked collation package comprising an external covering and a plurality of articles placed inside the external covering, wherein the articles comprised in the external covering are preferably individually wrapped in a polyolefin film, **characterised in that** said method comprises use of the biaxially oriented multilayer film according to any one of claims 1-8 as an external covering.

13. The method for realising a naked collation package according to claim 12, comprising steps of:

(1) providing a plurality of articles arranged in an ordered configuration, wherein said articles are individually wrapped in a polyolefin film;

(2) providing a biaxially oriented multilayer film according to any one of claims 1-8;

(3) wrapping the biaxially oriented multilayer film around the ordered configuration of articles, realising a tubular covering having two superposed edges and two open ends, wherein the internal layer (C) of said biaxially oriented multilayer film is facing towards the inside of the naked collation package;

(4) closing said covering by heat sealing the superposed edges at a temperature of 100°-145°C, preferably of 110°-140°C, more preferably of 115°-140°C;

(5) closing the open ends of said covering by superposing and heat sealing said open ends at a temperature of 100°-145°C, preferably of 110°-140°C, more preferably of 115°-140°C.

14. A naked collation package wherein the articles comprised in the external covering are preferably individually wrapped in a polyolefin film, said naked collation package comprising the multilayer film according to any one of claims 1-8 as an external covering.

15. A naked collation package according to claim 14, wherein said naked collation package is a pack of cigarette packages.

**Patentansprüche**

1. Eine biaxial gereckte mehrschichtige Folie, die mindestens drei Schichten, A/B/C, umfasst, wobei

- die äußere Schicht (A) ein Ethylenpolymer mit einem Schmelzpunkt (Tf) ≤ 100°C, vorzugsweise 70°-100°C, stärker bevorzugt 80°-100°C, noch stärker bevorzugt 90°-100°C, umfasst;

- die mittlere Schicht (B) ein Propylenpolymer mit einem Schmelzpunkt (Tf) ≥ 140°C, vorzugsweise ≥ 160°C, umfasst und

- die innere Schicht (C) ein Ethylenpolymer mit einem Schmelzpunkt (Tf) > 105°C und ≤ 115°C, vorzugsweise 110°-115°C, und einer Dichte von 0,910-0,940 g/cm$^3$, vorzugsweise 0,920-0,930 g/cm$^3$, umfasst.

2. Die biaxial gereckte mehrschichtige Folie gemäß Anspruch 1, wobei die äußere Schicht (A) mindestens ein Ethylencopolymer mit einer Dichte < 0,910 g/cm$^3$, vorzugsweise ≤ 0,900 g/cm$^3$, stärker bevorzugt 0,860-0,900 g/cm$^3$, noch stärker bevorzugt 0,870-0,900 g/cm$^3$, umfasst.

3. Die biaxial gereckte mehrschichtige Folie gemäß Anspruch 1 oder 2, wobei die mittlere Schicht (B) mindestens ein Propylenhomopolymer umfasst.

4. Die biaxial gereckte mehrschichtige Folie gemäß Anspruch 3, wobei die mittlere Schicht 10-20 Gewichtsprozent eines Masterbatch, vorzugsweise 12-15 Gewichtsprozent, bezogen auf das Gesamtgewicht der mittleren Schicht (B), umfasst, 40-60 Gewichtsprozent, bezogen auf den Masterbatch, mindestens eines amorphen Kohlenwasserstoffharzes umfassend.

5. Die biaxial gereckte mehrschichtige Folie gemäß einem beliebigen der Ansprüche 1-4, wobei das mindestens eine Ethylenpolymer, das in der inneren Schicht (C) umfasst ist, ein Polyethylen niedriger Dichte (low-density polyethylene, LDPE) ist.

6. Die biaxial gereckte mehrschichtige Folie gemäß einem beliebigen der Ansprüche 1-5, wobei die Folie mindestens eines der folgenden Merkmale hat:

- Elastizitätsmodul in MD und in TD $\geq$ 2000 N/mm$^2$, vorzugsweise 2000-3000 N/mm$^2$ in MD und 2000-4000 N/mm$^2$ in TD und/oder
- Zugfestigkeit in MD $\geq$ 160 N/mm$^2$, vorzugsweise 170-230 N/mm$^2$ und/oder
- Zugfestigkeit in TD $\geq$ 200 N/mm$^2$, vorzugsweise 200-250 N/mm$^2$ und/oder
- Verlängerung nach dem Bruch in MD und/oder in TD $\leq$ 120%, vorzugsweise 70-120%.

7. Die biaxial gereckte mehrschichtige Folie gemäß einem beliebigen der Ansprüche 1-6, wobei die Folie mindestens eines der folgenden Merkmale hat:

- Trübung $\leq$ 5,0%, stärker bevorzugt $\leq$ 3,0%, und/oder
- Klarheit $\geq$ 97,0%, stärker bevorzugt $\geq$ 98,0%, und/oder
- Glanz $\geq$ 65%, vorzugsweise $\geq$ 80%.

8. Die biaxial gereckte mehrschichtige Folie gemäß einem beliebigen der Ansprüche 1-7, wobei die biaxial gereckte mehrschichtige Folie in mindestens einer Richtung wärmeschrumpfend oder heißtrocknend, vorzugsweise in beide Richtungen wärmeschrumpfend, ist.

9. Ein Verfahren zur Herstellung der biaxial gereckten mehrschichtigen Folie gemäß einem beliebigen der Ansprüche 1-8, das folgende Schritte umfasst:

(i) das Coextrudieren der Komponenten in den mindestens drei Schichten (A), (B) und (C), wodurch eine mehrschichtige Folie gewonnen wird;
(ii) das Abschrecken der mehrschichtigen Folie auf einer Walze bei einer Temperatur von ungefähr 10°-40°C;
(iii) das Erhitzen der mehrschichtigen Folie mit Heizelementen, die bei einer Temperatur von ungefähr 100°-500°C gehalten werden;
(iv) das Aussetzen der mehrschichtigen Folie gegenüber gleichzeitigem biaxialem Recken ohne Kontakt mit Metallwalzen bei einer Temperatur von ungefähr 80°-210°C, mit Quer- (TD-) und Längs- (MD-)Gesamtlängenverhältnissen, die unabhängig in einem Bereich von 3-10 gewählt sind, wodurch eine biaxial gereckte mehrschichtige Folie gewonnen wird; und
(v) das Abkühlen der biaxial gereckten mehrschichtigen Folie.

10. Das Verfahren gemäß Anspruch 9 zur Herstellung der biaxial gereckten mehrschichtigen Folie, wärmeschrumpfend in MD und/oder TD, wobei Schritt (iv) folgende Teilschritte umfasst:

(iv.a1) Vorerhitzen: Erhitzen der mehrschichtigen Folie auf eine Temperatur von 150°-180°C, vorzugsweise 155°-165°C, wobei die Gesamtlängenverhältnisse in MD und TD beide gleich 1 gehalten werden;
(iv.b1) Recken: Aussetzen der mehrschichtigen Folie gegenüber gleichzeitigem biaxialem Recken bei einer Temperatur von 120°-165°C, vorzugsweise 125°-145°C, wobei die Längs- (MD-) und Quer-(MD-)Gesamtlängenverhältnisse auf unabhängig ausgewählte Werte im Bereich von 3-10, vorzugsweise 5,5-8, gebracht werden, und
(iv.c1) Stabilisieren: Halten der biaxial gereckten mehrschichtigen Folie bei einer Temperatur von 120°-180°C, vorzugsweise 125°-145°C, wobei das Gesamtlängenverhältnis in MD und/oder in TD unabhängig um Werte < 15% mit Bezug auf den Maximalwert des Gesamtlängenverhältnisses in derselben Richtung reduziert wird, das in Schritt (iv.b1) verwendet wird.

11. Das Verfahren gemäß Anspruch 9 zur Gewinnung einer biaxial gereckten mehrschichtigen Folie, heißtrocknend in MD und/oder TD, wobei Schritt (iv) folgende Teilschritte umfasst:

(iv.a2) Vorerhitzen: Erhitzen der mehrschichtigen Folie auf eine Temperatur von 150°-180°C, vorzugsweise 160°-175°C, wobei die Gesamtlängenverhältnisse in MD und TD beide gleich 1 gehalten werden;
(iv.b2) Recken: Aussetzen der mehrschichtigen Folie gegenüber gleichzeitigem biaxialem Recken bei einer Temperatur von 120°-165°C, vorzugsweise 150°-160°C, wobei die Längs- (MD-) und Quer-(MD-)Gesamtlängenverhältnisse auf unabhängig ausgewählte Werte im Bereich von 3-10, vorzugsweise 5,5-8, gebracht werden, und
(iv.c1) Stabilisieren: Halten der biaxial gereckten mehrschichtigen Folie bei einer Temperatur von 120°-180°C, vorzugsweise 150°-170°C, wobei das Gesamtlängenverhältnis in MD und/oder in TD unabhängig um Werte $\geq$ 15%, vorzugsweise $\geq$ 20%, mit Bezug auf den Maximalwert des Gesamtlängenverhältnisses in derselben Richtung reduziert wird, das in Schritt (iv.b2) verwendet wird.

12. Ein Verfahren zur Herstellung eines bloßen Sammelpakets, das eine äußere Abdeckung und eine Vielzahl in die äußere Abdeckung platzierter Gegenstände umfasst, wobei die in der äußeren Abdeckung umfassten Gegenstände vorzugsweise einzeln in eine Polyolefinfolie eingewickelt sind; **dadurch gekennzeichnet, dass** das Verfahren die Verwendung der biaxial gereckten mehrschichtigen Folie gemäß einem beliebigen der Ansprüche 1-8 als äußere Abdeckung umfasst.

13. Das Verfahren zur Herstellung eines bloßen Sammelpakets gemäß Anspruch 12, das folgende Schritte umfasst:

(1) das Bereitstellen einer Vielzahl von Gegenständen, angeordnet in einer geordneten Konfiguration, wobei die Gegenstände einzeln in eine Polyolefinfolie verpackt sind;
(2) das Bereitstellen einer biaxial gereckten mehrschichtigen Folie gemäß einem beliebigen der Ansprüche 1-8;
(3) das Wickeln der biaxial gereckten mehrschichtigen Folie um die geordnete Konfiguration von Gegenständen, wodurch eine schlauchförmige Abdeckung mit zwei übereinander gelegten Kanten und zwei offenen Enden hergestellt wird, wobei die innere Schicht (C) der biaxial gereckten mehrschichtigen Folie der Innenseite des bloßen Sammelpakets zugewandt ist;
(4) das Verschließen der Abdeckung durch Wärmeversiegelung der übereinander gelegten Kanten bei einer Temperatur von 100°-145°C, vorzugsweise 110°-140°C, stärker bevorzugt 115°-140°C;
(5) das Verschließen der offenen Enden der Abdeckung durch Übereinanderlegen und Wärmeversiegelung der offenen Enden bei einer Temperatur von 100°-145°C, vorzugsweise 110°-140°C, stärker bevorzugt 115°-140°C.

14. Ein bloßes Sammelpaket, wobei die in der äußeren Abdeckung umfassten Gegenstände vorzugsweise einzeln in eine Polyolefinfolie eingewickelt sind, wobei das bloße Sammelpaket die mehrschichtige Folie gemäß einem beliebigen der Ansprüche 1-8 als äußere Abdeckung umfasst.

15. Ein bloßes Sammelpaket gemäß Anspruch 14, wobei das bloße Sammelpaket eine Packung von Zigarettenschachteln ist.

**Revendications**

1. Film multicouche orienté biaxialement comprenant au moins trois couches A/B/C, dans lequel :

- la couche externe (A) comprend un polymère d'éthylène ayant un point de fusion (Tf) $\leq$ 100 °C, de préférence 70 à 100 °C, plus préférablement 80 à 100 °C, encore plus préférablement 90 à 100 °C ;
- la couche centrale (B) comprend un polymère de propylène ayant un point de fusion (Tf) $\geq$ 140 °C, de préférence $\geq$ 160 °C ; et
- la couche interne (C) comprend un polymère d'éthylène ayant un point de fusion (Tf) > 105 °C et $\leq$ 115 °C, de préférence 110 à 115 °C et une masse volumique de 0,910 à 0,940 g/cm$^3$ de préférence 0,920 à 0,930 g/cm$^3$.

2. Film multicouche orienté biaxialement selon la revendication 1, dans lequel la couche externe (A) comprend au moins un copolymère d'éthylène ayant une masse volumique < 0,910 g/cm$^3$, de préférence $\leq$ 0,900 g/cm$^3$, plus préférablement 0,860 à 0,900 g/cm$^3$, encore plus préférablement 0,870 à 0,900 g/cm$^3$.

3. Film multicouche orienté biaxialement selon la revendication 1 ou 2, dans lequel la couche centrale (B) comprend au moins un homopolymère de propylène.

4. Film multicouche orienté biaxialement selon la revendication 3, dans lequel la couche centrale comprend 10 à 20 % en poids d'un mélange maître, de préférence 12 à 15 % en poids, par rapport au poids total de la couche centrale (B), comprenant 40 à 60 % en poids, par rapport au mélange maître, d'au moins une résine hydrocarbure amorphe.

5. Film multicouche orienté biaxialement selon l'une quelconque des revendications 1 à 4, dans lequel le au moins un polymère d'éthylène compris dans la couche interne (C) est un polyéthylène basse densité (LDPE).

6. Film multicouche orienté biaxialement selon l'une quelconque des revendications 1 à 5, dans lequel le film présente au moins l'une des caractéristiques suivantes :

- un module d'élasticité en MD et en TD $\geq$ 2000 N/mm$^2$, de préférence de 2000 à 3000 N/mm$^2$ en MD et de 2000 à 4000 N/mm$^2$ en TD ; et/ou
- une résistance à la traction en MD $\geq$ 160 N/mm$^2$, de préférence de 170 à 230 N/mm$^2$ ; et/ou
- une résistance à la traction en TD $\geq$ 200 N/mm$^2$, de préférence de 200 à 250 N/mm$^2$ ; et/ou
- un allongement à la rupture en MD et/ou en TD $\leq$ 120 %, de préférence de 70 à 120 %.

7. Film multicouche orienté biaxialement selon l'une quelconque des revendications 1 à 6, dans lequel le film présente au moins l'une des caractéristiques suivantes :

- un trouble $\leq$ 5,0 %, plus préférablement $\leq$ 3,0 % ; et/ou
- une transparence $\geq$ 97,0 %, plus préférablement $\geq$ 98,0 % ; et/ou
- un brillant $\geq$ 65 %, de préférence $\geq$ 80 %.

8. Film multicouche orienté biaxialement selon l'une quelconque des revendications 1 à 7, ledit film multicouche orienté biaxialement étant thermorétractable ou thermodurcissable dans au moins une direction, de préférence thermorétractable dans les deux directions.

9. Procédé de production du film multicouche orienté biaxialement selon l'une quelconque des revendications 1 à 8, comprenant les étapes de :

(i) coextrusion des composants compris dans les au moins trois couches (A), (B) et (C), de façon à obtenir une feuille multicouche ;
(ii) trempe de ladite feuille multicouche sur un rouleau à une température d'environ 10 à 40 °C ;
(iii) chauffage de ladite feuille multicouche avec des éléments chauffants maintenus à une température d'environ 100 à 500 °C ;
(iv) soumission de ladite feuille multicouche à un étirement biaxial simultané sans contact avec des rouleaux métalliques à une température d'environ 80 °C à 210 °C, avec des rapports d'étirage transversal (TD) et longitudinal (MD) choisis indépendamment dans la plage de 3 à 10, de façon à obtenir un film multicouche orienté biaxialement ; et
(v) refroidissement du film multicouche orienté biaxialement.

10. Procédé selon la revendication 9 pour obtenir le film multicouche orienté biaxialement thermorétractable en MD et/ou TD, dans lequel l'étape (iv) comprend les sous-étapes suivantes :

(iv.a1) préchauffage : chauffage de la feuille multicouche à une température de 150 à 180 °C, de préférence de 155 à 165 °C, en maintenant les rapports d'étirage en MD et TD tous deux égaux à 1 ;
(iv.b1) étirage : soumission de la feuille multicouche à un étirage biaxial simultané à une température de 120 à 165 °C, de préférence de 125 à 145 °C, de façon à amener les rapports d'étirage longitudinal (MD) et transversal (MD) à des valeurs choisies indépendamment dans la plage de 3 à 10, de préférence de 5,5 à 8 ; et
(iv.c1) stabilisation : maintien du film multicouche orienté biaxialement à une température de 120 à 180 °C, de préférence de 125 à 145 °C, de façon à réduire le rapport d'étirage en MD et/ou en TD de valeurs indépen-damment $\leq$ 15 % par rapport à la valeur maximale du rapport d'étirage dans la même direction que celle utilisée à l'étape (iv.b1).

11. Procédé selon la revendication 9 pour obtenir un film multicouche orienté biaxialement thermodurci en MD et/ou TD, dans lequel l'étape (iv) comprend les sous-étapes suivantes :

(iv.a2) préchauffage : chauffage de la feuille multicouche à une température de 150 à 180 °C, de préférence de 160 à 175 °C, en maintenant les rapports d'étirage en MD et TD tous deux égaux à 1 ;
(iv.b2) étirage : soumission de la feuille multicouche à un étirage biaxial simultané à une température de 120 à 165 °C, de préférence de 150 à 160 °C, de façon à amener les rapports d'étirage longitudinal (MD) et transversal (MD) à des valeurs choisies indépendamment dans la plage de 3 à 10, de préférence de 5,5 à 8 ; et
(iv.c2) stabilisation : maintien du film multicouche orienté biaxialement à une température de 120 à 180 °C, de préférence de 150 à 170 °C, de façon à réduire le rapport d'étirage en MD et/ou en TD de valeurs indépen-damment $\geq$ 15 %, de préférence $\geq$ 20 % par rapport à la valeur maximale du rapport d'étirage dans la même direction que celle utilisée à l'étape (iv.b2).

**12.** Procédé de réalisation d'un emballage d'assemblage à nu comprenant une couverture externe et une pluralité d'articles placés à l'intérieur de la couverture externe, les articles compris dans la couverture externe étant de préférence enveloppés individuellement dans un film de polyoléfine, **caractérisé en ce que** ledit procédé comprend l'utilisation du film multicouche orienté biaxialement selon l'une quelconque des revendications 1 à 8 en tant que couverture externe.

**13.** Procédé de réalisation d'un emballage d'assemblage à nu selon la revendication 12, comprenant les étapes suivantes :

(1) la fourniture d'une pluralité d'articles agencés dans une configuration ordonnée, lesdits articles étant enveloppés individuellement dans un film de polyoléfine ;
(2) la fourniture d'un film multicouche orienté biaxialement selon l'une quelconque des revendications 1 à 8 ;
(3) l'enveloppement du film multicouche orienté biaxialement autour de la configuration ordonnée d'articles, de façon à réaliser une couverture tubulaire ayant deux bords superposés et deux extrémités ouvertes, la couche interne (C) dudit film multicouche orienté biaxialement faisant face à l'intérieur de l'emballage d'assemblage à nu ;
(4) la fermeture de ladite couverture par thermoscellage des bords superposés à une température de 100 à 145 °C, de préférence de 110 à 140 °C, plus préférablement de 115 à 140 °C ;
(5) la fermeture des extrémités ouvertes de ladite couverture en superposant et en thermoscellant lesdites extrémités ouvertes à une température de 100 à 145 °C, de préférence de 110 à 140 °C, plus préférablement de 115 à 140 °C.

**14.** Emballage d'assemblage à nu dans lequel les articles compris dans la couverture externe sont de préférence enveloppés individuellement dans un film de polyoléfine, ledit emballage d'assemblage à nu comprenant le film multicouche selon l'une quelconque des revendications 1 à 8 en tant que couverture externe.

**15.** Emballage d'assemblage à nu selon la revendication 14, ledit emballage d'assemblage à nu étant une cartouche de paquets de cigarettes.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090053513 A
- EP 2520428 A
- WO 2014087150 A
- US 4853602 A